# EUROPÄISCHE PATENTSCHRIFT

(11) **EP 2 307 753 B1**
(45) Veröffentlichungstag und Bekanntmachung des Hinweises auf die Patenterteilung: **08.02.2012**
(21) Anmeldenummer: 09777444.2
(22) Anmeldetag: 27.07.2009
(51) Int. Cl.: F16D 65/38, F16D 65/56

(54) **VERFAHREN ZUM FESTSETZEN EINER NACHSTELLVORRICHTUNG AN EINER SCHEIBENBREMSE**
METHOD FOR FIXING AN ADJUSTMENT DEVICE ON A DISK BRAKE
PROCÉDÉ PERMETTANT LA FIXATION D'UN DISPOSITIF D'AJUSTEMENT SUR UN FREIN À DISQUE

(30) Priorität: 30.07.2008 DE 102008035369
(43) Veröffentlichungstag der Anmeldung: 13.04.2011
(73) Patentinhaber: Knorr-Bremse Systeme für Nutzfahrzeuge GmbH, 80809 München (DE)
(72) Erfinder: IRASCHKO, Johann, 85301 Schweitenkirchen (DE); KEMPINGER, Georg, 85386 Eching (DE); ORGLER, Florian, 80335 München (DE)
(74) Vertreter: Mattusch, Gundula
(86) Internationale Anmeldenummer: PCT/EP2009/005409
(87) Internationale Veröffentlichungsnummer: WO 2010/012427

(56) Entgegenhaltungen:
- EP-A- 0 614 025
- EP-A- 0 753 683
- DE-A1-102004 037 771
- DE-C1- 19 729 024
- DE-C1- 19 903 620

## Beschreibung

Die Erfindung betrifft ein Verfahren zum Festsetzen einer Nachstellvorrichtung an einer Scheibenbremse nach dem Oberbegriff des Anspruchs 1 und eine Scheibenbremse gemäß dem Oberbegriff des Anspruchs 6.

Pneumatisch betätigte Scheibenbremsen gehören mittlerweile zur Standardausrüstung bei schweren Nutzfahrzeugen.

Derartige Scheibenbremsen benötigen zur Erzeugung der geforderten Zuspannkraft, eine mechanische Übersetzung, da die Kraft der pneumatisch beaufschlagten Bremszylinder wegen des Druckniveaus (derzeit ca. 10 bar) und der limitierten Baugröße der Bremiszylinder beschränkt ist. Bei den derzeit bekannten pneumatisch betätigten Scheibenbremsen finden sich Übersetzungsverhältnisse zwischen 10: 1 und 20:1. Die Kolbenhübe der Bremszylinder bewegen sich zwischen 50 und 75 mm, damit ergeben sich Zuspannwege zum Andrücken der Bremsbeläge an die Bremsscheibe von etwa 4 mm.

Die Reibmaterialdicke der Bremsbeläge liegt im Bereich von 20 mm, da 2 Beläge eingebaut sind ergibt sich somit, ohne Berücksichtigung des Scheibenverschleißes, ein Verschleißweg von etwa 40 mm. Dieser Weg ist um ein Vielfaches größer als der o. e. Zuspannweg. Es besteht daher die Notwendigkeit die Bremse mittels einer Vorrichtung, dem Belagverschleiß entsprechend, nachzustellen. Stand der Technik ist eine automatisch arbeitende Verschleißnachstellung, damit wird erreicht, dass das so genannte Lüftspiel, damit ist der Spalt zwischen den Bremsbelägen und der Bremsscheibe im unbetätigten Zustand gemeint, unabhängig vom verschleißzustand und Verschieißverhalten der Bremsbeläge, konstant gehalten wird.

Sehr häufig findet man in Nutzfahrzeugen Scheibenbremsen, welche über eine Nachstellvorrichtung verzügen, die konzentrisch im Hohlraum eines Gewindestempels angeordnet ist und exzentrisch über ein Antriebselement (Schaltfinger) vom Bremshebel bzw. Drehhebel angetrieben wird. Bei einem Bremsvorgang führt der mit der Kolbenstange des Bremszylinders gekoppelte Bremshebel eine Drehbewegung aus. Bevor über den Koppelmechanismus der Nachstellung (Schaltgabel und Schaltfinger) die Drehbewegung des Hebels in den Nachsteller eingeleitet wird, muss ein so genannter Leerweg überwunden werden. Dieser Weg ist für die Größe des so genannten Lüftspiels ausschlaggebend, da während dieser Bewegung die Nachstellung nicht aktiviert wird, und der Zuspannweg damit das Lüftspiel darstellt. Nach Überwinden dieses Leerwegs wird die Nachsiellvorrichtung in eine Drehbewegung versetzt, und durch die Koppelung mit dem Gewindestempel bzw. -rohr wird ein Nachstellvorgang eingeleitet.

Nachstellvorrichtungen für Scheibenbremsen gibt es in unterschiedlichen Ausführungen. Aus der DE 10 2004 037 771 A1 ist eine Nachstellvorrichtung für eine Scheibenbremse bekannt. Sie ist für eine pneumatisch betätigte Scheibenbremse, insbesondere in Schiebesattelausführung, geeignet. Weiterhin ist sie aber auch in pneumatisch betätigten Fest- oder Schwenksattelscheibenbremsen verwendbar.

Die DE 10 2004 037 711 A1 beschreibt eine solche Nachstellvorrichtung, die in Fig. 5 gezeigt ist. Sie besteht im Wesentlichen aus folgenden Funktionselementen:
- Welle 2
- Lagerscheibe 3
- Axiallager 5
- Bundbuchse, bzw. Distanzhülse 19
- Schaltgabel, bzw. Antriebsring 6
- Kugelrampenkupplung 7
- Konuskupplung 17
- Zylinderfeder 12

Die Nachstellvorrichtung muss im Wesentlichen zwei Funktionen erfüllen:
1. die automatische Lüftspieleinstellung
2. die manuelle Rückstellung der Nachstellmechanik beim Erneuern der Bremsbeläge.

Damit die Funktion der Nachstellvorrichtung für einen automatischen Nachstellvorgang beim Bremsen und für eine manuelle Rückstellung bei Erneuerung von Bremsbelägen sichergestellt ist, ist eine Fixierung der Nachstellvorrichtung im Bremssattel und eine Positionierung der Nachstellvorrichtung zum Bremshebel erforderlich.

In Anbetracht von Fertigungstoleranzen und relativ großer Streuung von Serienbauteilen besteht eine Problematik in einer individuellen Positionierung und Fixierung der Nachstellvorrichtung.

Daher ist es erforderlich, dass beim Einbau der Nachstellvorrichtung in die Bremse die Festsetzung der Nachstellvon-ichtung entsprechend der vorhandenen Toleranzlage erfolgt. Derzeitiger Stand ist eine Drehfixierung mittels einer Nase an der Lagerscheibe der Nachstellvorrichtung und einer entsprechenden Tasche im Bremssattel. Mit dieser Anordnung ist es jedoch nicht möglich, die Nachstellvorrichtung individuell zu platzieren. Um eine individuelle Positionierung zu ermöglichen, ist daher eine anpassungsfähige Ärretiermethode erforderlich

Entsprechende Methoden wären z.B. Schweißen oder Kleben.
Beim Schweißen besteht jedoch die Schwierigkeit, dass innerhalb eines Montageablaufs dies nur mit erhöhtem Aufwand (Schutz vor Strahlung und Schweißgasen) integriert werden kann. Ferner ist das Verschweißen von unterschiedlichen Materialien, wie in diesem Fall von Kugelgraphitguss und Stahl relativ schwierig.
Beim Kleben müssen die Flächen sehr sauber und fettfrei sein, dies zu gewährleisten ist ebenfalls mit sehr viel Aufwand verbunden, da viele Bauteile zur dauerhaften Funktion mit Fett montiert werden müssen.
Beide Verfahren haben außerdem den Nachteil, dass eine Rückmontage schwierig bzw. unmöglich ist.

Die Aufgabe der vorliegenden Erfindung besteht daher darin, ein verbessertes Verfahren zum Festsetzen einer Nachsiellvorrichtung an einer Scheibenbremse bereitzustellen, wobei die obigen Nachteile entfallen bzw. bedeutend verringert und weitere Vorteile geschaffen sind.

Die Aufgabe wird durch ein Verfahren mit den Merkmalen des Anspruchs 1 gelöst.

Die Aufgabe wird auch durch eine Scheibenbremse mit Nachstellvorrichtung mit den Merkmalen des Anspruchs 6 gelöst.

Durch das erfindungsgemäße Verfahren wird ein Festsetzen der Nachstellvorrichtung nach erfolgtem Positionieren durch das Einpressen eines Arretierelementes, zum Beispiel einer Kugel oder eines kurzen Zylinderstifts, in eine Ausnehmung eines Bremssattels einer Scheibenbremse durchgeführt.

Das Einpressen der Kugel ergibt sich einerseits zwischen Lagerscheibe und Sattel eine Presskraft und andererseits durch die Verformung an der Lagerscheibe eine formschlüssige Verbindung. Damit ist eine zuverlässige, dauerfeste Verdrehsicherung der Nachstellvorrichtung gewährleistet. Eine Rückmontage ist bei dieser Befestigungsmethode ebenfalls möglich.

Vorteilhafte Ausbildungen sind in den Unteransprüchen angegeben.

Die Nachstellvorrichtung wird zunächst in einer vorher eingestellten Ruhestellung in eine Stellspindel der Scheibenbremse eingesetzt, wobei ein Koppeln eines Antriebsrings (zum Beispiel mit einer Schaltgabel) der Kachstellvorrichtung mit einem Drehhebel der Scheibenbremse und ein Zentrieren mittels einer Lagerscheibe der Nachstellvorrichtung in einer Aufnahme eines Bremssattels erfolgt. Dann wird die Nacbstellvorrichtung durch Verdrehen derselben individuell positioniert, wobei ein Verformungsabschnitt der Lagerscheibe über einer im Bremssattel vorhandenen Ausnehmung angeordnet ist.

Das Arretierelement wird zwischen Lagerscheibe der Nachstellvorrichtung und dem Bremssattel in die Ausnehmung eingepresst. Die Größe der Kugel ist so gewählt, dass am Sattel die bisherige Ausnehmung im Sattel verwendet werden kann. Dadurch sind am Bremssattel keine zusätzlichen Bearbeitungsvorgänge notwendig. Die Lagerscheibe der Nachstellvorrichtung bzw. des Nachstellers ist so gestaltet, dass sich eine genügend starke Verpressung und Verformung einstellt, ohne dass dabei zu hohe Montagekräfte auftreten.

Eine Scheibenbremse, insbesondere pneumatisch betätigte Scheibenbremse, mit einer Nachstellvonichtung zur Nachstellung eines Verschleißes von Bremsbelägen und Bremsscheibe einer pneumatisch betätigten Scheibenbremse mit einer drehhebelbetätigten Zuspannvorrichtung, die vorzugsweise in eine Stellspindel der Scheibenbremse einsetzbar und an einem Bremssattels der Scheibenbremse, welcher eine Ausnehmung aufweist, mittels einer Lagerscheibe anbringbar ist, ist dadurch gekennzeichnet, dass die Lagerscheibe mittels eines Arretierelementes in positionierter Stellung der Nachstellvorrichtung mit dem Bremssattel formschlüssig verbunden ist.

Die Lagerscheibe ist mit zumindest einen Verformungsabschnitt zur formschlüssigen Verbindung mit dem Bremssattel und mit zumindest einer Lasche zur drehfesten Verbindung mit der Nachstellvorrichtung versehen.

Die Erfindung wird nun anhand einer beispielhaften Ausführung mit Bezug auf die beigefügten Zeichnungen näher erläutert. Hierbei zeigen:
- Fig. 1: eine Teilschnittdarstellung einer beispielhaften Ausführung einer erfindungsgemäßen Nachstellvorrichtung;
- Fig. 2: eine vergrößerte perspektivische Ansicht eines Ausführungsbeispiels einer Lagerscheibe;
- Fig. 3: eine Draufsicht auf die in einen Bremssattel eingebaute Nachstellvorrichtung mit fixierter Lagerscheibe;
- Fig. 4: eine Schnittansicht längs der Längsachse der Nachstellvorrichtung nach Fig. 3;
- Fig. 5: eine Teilschnittdarstellung einer Nachstellvorrichtung nach dem Stand der Technik; und
- Fig. 6: eine schematische Darstellung einer Scheibenbremse.

Elemente mit gleichen oder ähnlichen Funktionen sind in den Figuren mit gleichen Bezugszeichen versehen.

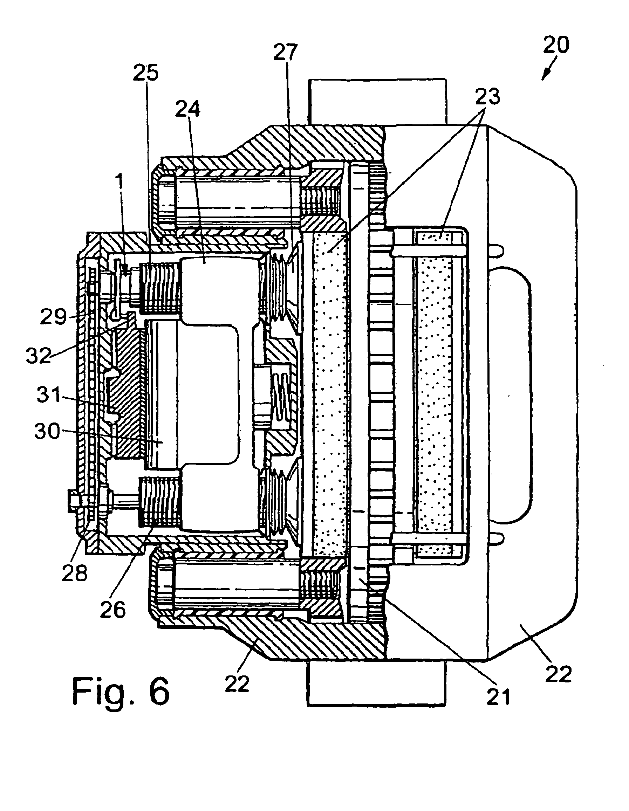

Zu Aufbau und Funktion einer pneumatischen Scheibenbremse nach Fig. 6 wird auf die entsprechende Beschreibung der DE 197 29 024 C1 verwiesen. In der Fig. 6 sind die folgenden Komponenten angegeben: Scheibenbremse 20, Bremsscheibe 21, Bremssattel 22, Bremsbeläge 23, Traverse 24, Stellspindeln 25 und 26, Druckstücke 27, Kettenräder 28, Kette 29, Exzenter 30 und Drehhebel 31, welcher ein Antriebselement 32 aufweist, das mit einer Schaltgabel einer Nachstellvorrichtung 1 in Zusammenwirkung steht. Die Nachstellvorrichtung 1 ist hier in der Stellspindel 25 angeordnet. Eine derartige Nachstellvorrichtung 1 wird nun näher erläutert. Die Nachstellvorrichtung 1 wäre auch für eine elektromotrisch betätigte Scheibenbremse geeignet.

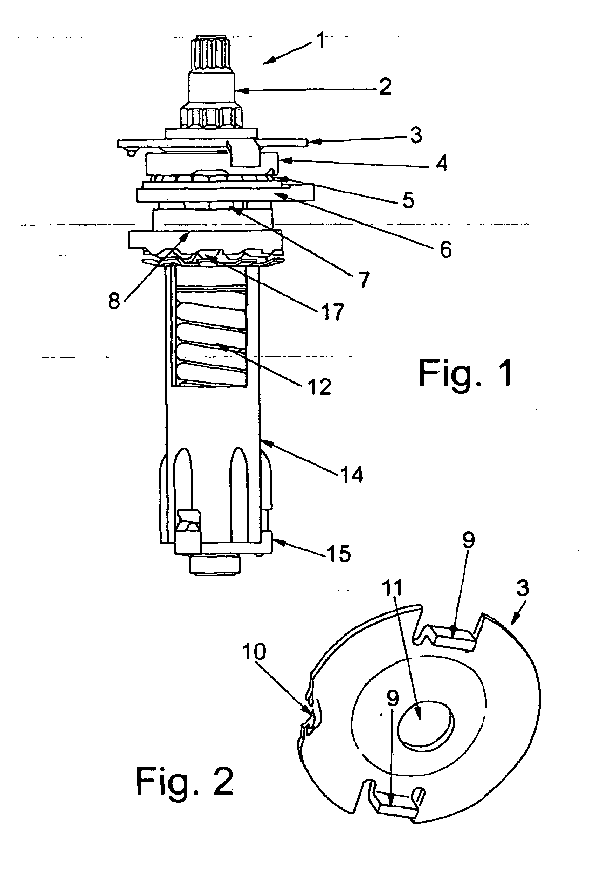

Fig. 1 ist eine Teilschnittdarstellung einer beispielhaften Ausführung einer erfindungsgemäßen Nachstellvorrichtung 1.

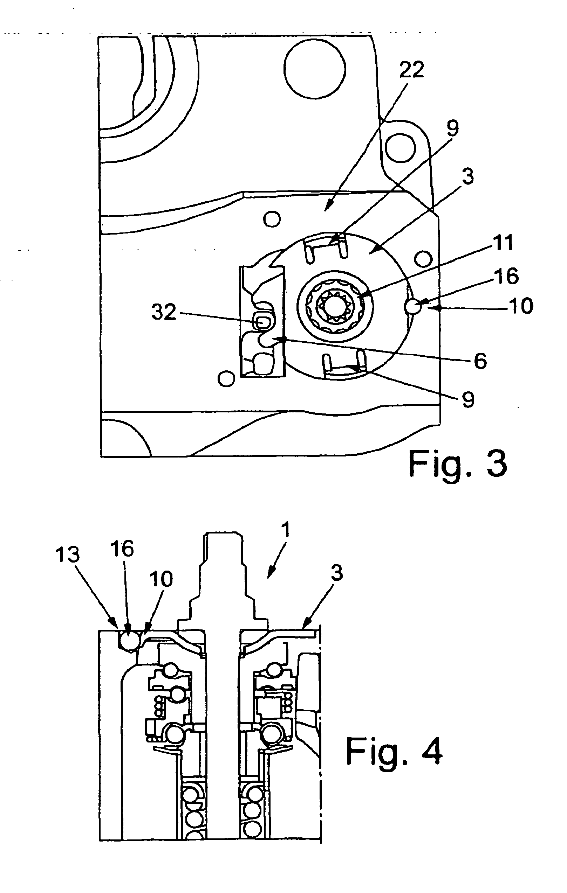

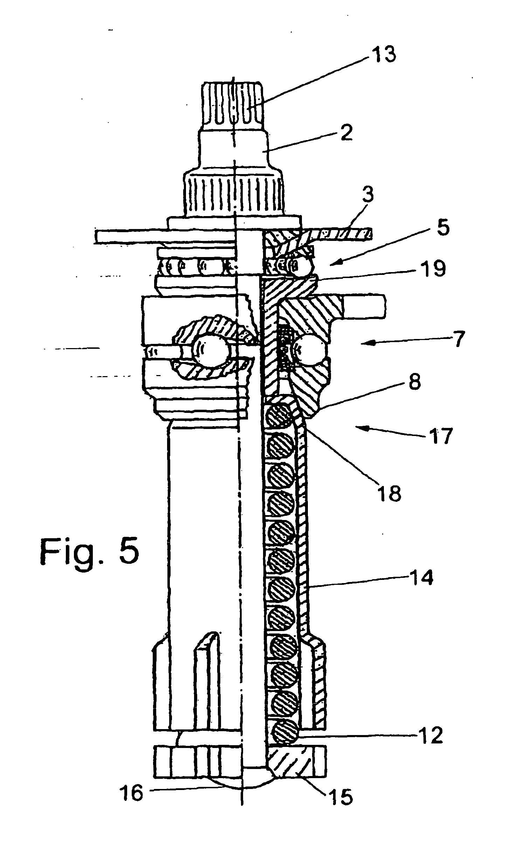

Die Nachstellvorrichtung 1 weist Folgendes auf: eine Welle 2, mit einem Antriebszapfen an ihrem oberen Ende; eine Lagerscheibe 3 zur Befestigung der Nachstellvorrichtung 1 im Bremssattel 22 (siehe Fig. 3 und 6); eine Bundbuchse 4, die verdrehsicher mit der Lagerscheibe 3 über Laschen 9 (siehe Fig. 2) gekoppelt ist und einen oberen Bund mit einer darunter angeordneten Lauffläche für Kugeln eines Axiallagers 5 aufweist; einen Antriebsring 6, der mit einer Schaltgabel verbunden ist, die mit dem Antriebselement 32 (siehe Fig. 3 und 6) des Drehhebels 31 gekoppelt ist; eine Kugelrampenkupplung 7, mit einem Kupplungsring 8, welcher mit Kugeln und einer Kegelbuchse zusammenwirkt, die mit einer Federhülse 14 drehfest verbunden ist; eine Zylinderfeder 12, die in der Federhülse 14 angeordnet ist und sich auf einer Profilscheibe 15 abstützt; und ein Einstellelement, zum Beispiel eine Mutter, die auf dem unteren Ende der Welle 2 angeordnet ist und zum Spannen der Zylinderfeder 12 und zum axialen Zusammenhalt der Elemente der Nachstellvorrichtung 1 dient. Die allgemeine Funktion der Nachstellvorrichtung 1 wird in DE 10 2004 037 771 A1 mit Bezug auf Fig. 5 ausführlich beschrieben, worauf hier verwiesen wird.

Als ein erster Unterschied zu der Nachstellvorrichtung nach Fig. 5 ist bei der Nachstellvorrichtung 1 gemäß der vorliegenden Erfindung das Axiallager 2 aus dem Bund der Bundbuchse 4, einer Seite des Antriebsrings 4 und Wälzkörpern gebildet. Das untere Ende der sich durch die Kugelrampenkupplung 7 hindurch erstreckenden Bundbuchse 4 wirkt mit einem Kupplungsring der Konuskupplung 17 zusammen, wobei ein begrenzter Arbeitsdrehwinkel festgelegt ist. Die Arretierung der Bundbuchse 4 an der Lagerscheibe 3 ist in diesem Beispiel derart ausgeführt, indem umgebogene Laschen 9 (Fig. 2) der Lagerscheibe 3 in radiale Ausnehmungen am Umfang des Bundes der Bundbuchse 4 eingreifen.

Fig. 2 zeigt eine perspektivische Darstellung der Lagerscheibe 3, welche eine Durchführung 11 für die Welle 2 aufweist. Zwei radial gegenüberliegende, abgewinkelte Laschen 9 sind zur Verbindung mit der Bundbuchse 8 vorgesehen. Die Lagerscheibe 3 ist weiterhin mit einem Verformungsabschnitt 10 zur Festlegung an dem Bremssattel 2 ausgebildet, was weiter unten noch näher erläutert wird.

Um das manuelle Zurückdrehen bei der Nachstellvorrichtung 1 zu ermöglichten, ist eine exakte Positionierung zum Drehhebel 31 (siehe Fig. 3 und 6) erforderlich. Beim manuellen Zurückdrehen muss die Sperrwirkung der Kugelrampenkupplung 7 und der Konuskupplung 17 in der Ruhestellung der Nachstellvorrichtung 1 eliminiert werden. Die Ruhestellung ist die Ausgangsposition, aus welcher heraus ein Nachstellvorgang mittels des Drehhebels bei einem Bremsvorgang eingeleitet wird. In dieser Ruhestellung wird auch das Zurückdrehen der Nachstellvorrichtung 1 ausgeführt.

Um dies zu gewährleisten ist es erforderlich den Kupplungsring 8 mittels eines Anschlags am Zurückdrehen zu hindern. Die Bohrung des Kupplungsrings 8 verfügt daher über einen Anschlag (nicht gezeigt), mit dessen Hilfe der Kupplungsring 8 in der Ruhestellung des Nachstellvorrichtung 1 beim Rückstellen auch am Zurückdrehen gehindert wird. Die Abstützung des Kupplungsrings 8 erfolgt mittels der Laschen 9 an der Lagerscheibe 3 drehfest gelagerten Bundbuchse 4, welche einen zum Anschlag des Kupplungsrings 8 passenden Anschlag aufweist, was hier nicht dargestellt ist. Die beiden Anschläge sind so aufeinander abgestimmt, dass der Kupplungsring 8 den für einen Arbeitswinkel, das heißt für den durch den Drehhebel 31 bewirkten Verdrehwinkel der Nachstellvorrichtung 1 notwendigen Freigang für die automatische Lüftspieleinstellung aufweist. Damit die Klemmwirkung des Freilaufs in der Ruhestellung nicht auftritt, ist es sehr wichtig, dass die Bundbuchse 4 und die über die Anschläge gekoppelte Kupplungsscheibe 8 korrekt positioniert werden.

Fig. 3 zeigt eine Draufsicht auf die in einen Bremssattel 22 eingebaute Nachstellvorrichtung 1 mit fixierter Lagerscheibe 3. Fig. 4 illustriert eine Schnittansicht längs der Längsachse der eingebauten Nachstellvorrichtung nach Fig. 3.

Ein erfindungsgemäßes Verfahren zum Festsetzen der Nachstellvorrichtung 1 wird nun erläutert. Zunächst wird die Nachstellvorrichtung in der vorher eingestellten Ruhestellung in eine Stellspindel 25, 26 der Scheibenbremse 20 (siehe Fig. 6) eingesetzt, wobei ein Koppeln einer Schaltgabel des Antriebsrings 6 der Nachstellvorrichtung 1 mit dem Drehhebel 31 (hier mit einem Antriebselement 32) der Scheibenbremse 20 und ein Zentrieren mittels der Lagerscheibe 3 in einer Aufnahme des Bremssattels 22 erfolgt. Die Nachstellvorrichtung 1 kann nun zum exakten Positionieren, zum Beispiel mit Hilfe von Einstelllehren, verdreht werden, so dass sich die gezeigte Position von Schaltgabel und Antriebselement 32 ergibt.

In der so eingestellten Position befindet sich der Verformungsabschnitt 10 (Fig. 2) über einer Ausnehmung 13 des Bremssattels 22. Ein Festsetzen der Nachstellvorrichtung an der Scheibenbremse 20 wird nun durch Arretieren der Lagerscheibe 3 an dem Bremssattel 22 mittels eines Arretierelementes 16, zum Beispiel einer Kugel oder eines Zylinderstifts, ausgeführt. Das Arretierelement 16 kann zum Beispiel eingepresst werden. Der Verformungsabschnitt 10 wird dabei, wie Fig. 4 zeigt, in die Ausnehmung 13 hinein verformt und bildet zusammen mit dem Arretierelement 16 eine formschlüssige Verbindung der Lagerscheibe 3 mit dem Bremssattel 22.

Die Größe der Kugel ist so gewählt, dass am Sattel die bisherige Ausnehmung im Sattel verwendet werden kann. Dadurch sind am Bremssattel keine zusätzlichen Bearbeitungsvorgänge notwendig. Die Lagerscheibe des Nachstellers ist so gestaltet, dass sich eine genügend starke Verpressung und Verformung einstellt, ohne dass dabei zu hohe Montagekräfte auftreten.

Die Erfindung ist nicht auf die oben beschriebenen Ausführungsbeispiele beschränkt. Sie ist im Rahmen der beigefügten Ansprüche modifizierbar.

Die Festsetzung der Lagerscheibe 3 an dem Bremssattel 22 kann rückmontierbar sein, das heißt, mittels eines geeigneten Werkzeugs kann das Arretierelement 16 entfernt werden, wobei die Lagerscheibe 3 ebenfalls mit einem entsprechenden Werkzeug lösbar und die Nachstellvorrichtung 1 herausnehmbar ist, zum Beispiel für einen Austausch.

### Bezugszeichenliste

- 1: Nachstellvorrichtung
- 2: Welle
- 3: Lagerscheibe
- 4: Bundbuchse
- 5: Axiallager
- 6: Antriebsring
- 7: Kugelrampenkupplung
- 8: Kupplungsring
- 9: Lache
- 10: Verformungsabschnitt
- 11: Durchführung
- 12: Zylinderfeder
- 13: Ausnehmung
- 14: Federhülse
- 15: Profilscheibe
- 16: Arretierelement
- 17: Konuskupplung
- 18: Hülsenkonus
- 19: Distanzhülse
- 20: Scheibenbremse
- 21: Bremsscheibe
- 22: Bremssattel
- 23: Bremsbeläge
- 24: Traverse
- 25: Erste Stellspindel
- 26: Zweite Stellspindel
- 27: Druckstück
- 28: Kettenräder
- 29: Kette
- 30: Exzenter
- 31: Drehhebel
- 32: Antriebselement

## Patentansprüche

1. Verfahren zum Festsetzen einer Nachstellvorrichtung (1) an einer Scheibenbremse (20), insbesondere pneumatisch betätigte Scheibenbremse (20), mit folgenden Verfahrensschritten:
V1 Einsetzen der Nachstellvorrichtung (1) in einer vorher eingestellten Ruhestellung in eine Stellspindel (25, 26) der Scheibenbremse (20), wobei ein Koppeln eines Antriebsrings der Nachstellvorrichtung (1) mit einem Drehhebel (31) der Scheibenbremse (20) und ein Zentrieren mittels einer Lagerscheibe (3) der Nachstellvorrichtung (1) in einer Aufnahme eines Bremssattels (22) erfolgt;
V2 Positionieren der Nachstellvorrichtung (1) durch Verdrehen derselben; und
V3 Festsetzen der Nachstellvorrichtung (1) an der Scheibenbremse (20) durch Arretieren der Lagerscheibe (3) an dem Bremssattel (22) mittels eines Arretierelementes (16).

2. Verfahren nach Anspruch 1, **dadurch gekennzeichnet, dass** die Lagerscheibe (3) beim Zentrieren mit einem Verformungsabschnitt (10) über einer Ausnehmung (13) des Bremssattels (22) angeordnet wird.

3. Verfahren nach Anspruch 2, **dadurch gekennzeichnet, dass** das Arretierelement (16) beim Arretieren den Verformungsabschnitt (10) in die Ausnehmung (13) einpresst und eine formschlüssige Verbindung der Lagerscheibe (3) mit dem Bremssattel (22) bildet.

4. Verfahren nach einem der vorhergehenden Ansprüche, **dadurch gekennzeichnet, dass** das Arretierelement (16) eine Kugel ist.

5. Verfahren nach einem der vorhergehenden Ansprüche 1 bis 3, **dadurch gekennzeichnet, dass** das Arretierelement (16) ein Stift ist.

6. Scheibenbremse (20), insbesondere pneumatisch betätigte Scheibenbremse, mit einer Nachstellvorrichtung (1) zur Nachstellung eines Verschleißes von Bremsbelägen (23) und Bremsscheibe (21) einer pneumatisch betätigten Scheibenbremse (20) mit einer drehhebelbetätigten Zuspannvorrichtung, die vorzugsweise in eine Stellspindel (25) der Scheibenbremse (20) einsetzbar und an einem Bremssattel (22) der Scheibenbremse (20), welcher eine Ausnehmung (13) aufweist, mittels einer Lagerscheibe (3) anbringbar ist, wobei die Lagerscheibe (3) mittels eines Arretierelementes (16) in positionierter Stellung der Nachsiellvonichtung mit dem Bremssattel (22) formschlüssig verbunden ist, **dadurch gekennzeichnet, dass** die Lagerscheibe (3) zumindest einen Verformungsabschnitt (10) zur formschlüssigen Verbindung mit dem Bremssattel (22) und zumindest ein Lasche (9) zur drehfesten Verbindung mit der Nachsiellvorrichtung (1) aufweist.

7. Scheibenbremse (20) nach Anspruch 6, **dadurch gekennzeichnet, dass** der Verformungsabschnitt (10) der Lagerscheibe (3) durch das Arretierelement (16) verformt ist und mit dem Arretierelement (16) in der Ausnehmung (13) eine formschlüssige Verbindung mit dem Bremssattel (22) bildet.

8. Scheibenbremse (20) nach Anspruch 7, **dadurch gekennzeichnet, dass** die formschlüssige Verbindung durch Entfernung des Arretierelementes (16) rückmontierbar ist.

## Claims

1. Method for fixing an adjusting device (1) to a disc brake (20), in particular a pneumatically actuated disc brake (20), having the following method steps:
V1 inserting the adjusting device (1) in a previously set rest position into a control spindle (25, 26) of the disc brake (20), with a drive ring of the adjusting device (1) being coupled to a rotary lever (31) of the disc brake (20) and with centring being provided by means of a bearing disc (3) of the adjusting device (1) in a receptacle of a brake calliper (22);
V2 positioning the adjusting device (1) by turning the latter; and
V3 fixing the adjusting device (1) to the disc brake (20) by locking the bearing disc (3) to the brake calliper (22) by means of a locking element (16).

2. Method according to claim 1, **characterised in that**, during centring, the bearing disc (3) is arranged with a deformation section (10) over a recess (13) of the brake calliper (22).

3. Method according to claim 2, **characterised in that**, during locking, the locking element (16) presses the deformation section (10) into the recess (13) and forms a positive fitting connection of the bearing disc (3) to the brake calliper (22).

4. Method according to one of the preceding claims, **characterised in that** the locking element (16) is a ball.

5. Method according to one of the preceding claims 1 to 3, **characterised in that** the locking element (16) is a pin.

6. Disc brake (20), in particular a pneumatically actuated disc brake, having an adjusting device (1) for adjusting for wear of the brake linings (23) and the brake disc (21) of a pneumatically actuated disc brake (20) having a rotary-lever-actuated brake application device, which adjusting device can preferably be inserted into a control spindle (25) of the disc brake (20) and attached by means of a bearing disc (3) to a brake calliper (22), which has a recess (13), of the disc brake (20), wherein the bearing disc (3) is connected in a positive fitting manner to the brake calliper (22) by means of a locking element (16) when the adjusting device is positioned, **characterised in that** the bearing disc (3) has at least one deformation section (10) for positive fitting connection to the brake calliper (22) and at least one lug (9) for rotationally secure connection to the adjusting device (1)

7. Disc brake (20) according to claim 6, **characterised in that** the deformation section (10) of the bearing disc (3) is deformed by the locking element (16) and, with the locking element (16) in the recess (13), forms a positive fitting connection to the brake calliper (22).

8. Disc brake (20) according to claim 7, **characterised in that** the positive fitting connection can be disassembled by removing the locking element (16).

## Revendications

1. Procédé de fixation d'un dispositif (1) d'ajustement à un frein (20) à disque, notamment à un frein (20) à disque à actionnement pneumatique, comprenant les stades de procédé suivants :
V1 on insère le dispositif (1) d'ajustement en une position de repos réglée auparavant dans une broche (25, 26) de réglage du frein (20) à disque, un accouplement d'une bagues d'entraînement du dispositif (1) d'ajustement à un levier (31) de rotation du frein (20) à disque et un centrage au moyen d'un disque de palier du dispositif (1) d'ajustement dans un logement de l'étrier (22) de frein s'effectuant ;
V2 on met le dispositif (1) d'ajustement en position en le faisant tourner ; et
V3 on fixe le dispositif (1) d'ajustement sur le frein (20) à disque en bloquant le disque (3) de palier sur l'étrier (22) de frein au moyen d'un élément (16) de blocage.

2. Procédé suivant la revendication 1, **caractérisé en ce que** l'on met le disque (3) de palier lors du centrage par une partie (10) de déformation sur un évidement (13) de l'étrier (22) de frein.

3. Procédé suivant la revendication 2, **caractérisé en ce que** l'on enfonce l'élément (16) de blocage, lors du blocage de la partie (10) de déformation, dans l'évidement (13) et on forme une liaison à complémentarité de forme du disque (3) de palier avec l'étrier (22) de frein.

4. Procédé suivant l'une des revendications précédentes, **caractérisé en ce que** l'élément (16) de blocage est une bille.

5. Procédé suivant l'une des revendications 1 à 3, **caractérisé en ce que** l'élément (16) de blocage est une tige.

6. Frein (20) à disque, notamment frein à disque à actionnement pneumatique, comprenant un dispositif (1) d'ajustement pour le rattrapage d'une usure de garnitures (23) et du disque (21) d'un frein (20) à disque à actionnement pneumatique, comprenant un dispositif de serrage actionné par levier tournant, qui peut être inséré de préférence dans une broche (25) de réglage du frein (20) à disque, et qui peut être mis sur un étrier (22) du frein (20) à disque lequel a un évidement (13), le disque (3) de palier étant relié à complémentarité de forme avec l'étrier (22) de frein au moyen d'un élément (16) de blocage en une position positionnée du dispositif d'ajustement, **caractérisé en ce que** le disque (3) de palier comporte au moins une partie (10) de déformation pour la liaison à complémentarité de forme avec l'étrier (22) de frein et au moins une éclisse (9) pour la liaison solidaire en rotation avec le dispositif (1) d'ajustement.

7. Frein (20) à disque suivant la revendication 6, **caractérisé en ce que** la partie (20) de déformation du disque (3) de palier est déformée par l'élément (16) de blocage et forme avec l'élément (16) de blocage dans l'évidement (13) une liaison à complémentarité de forme avec l'étrier (22) de frein.

8. Frein (20) à disque suivant la revendication 7, **caractérisé en ce que** la liaison à complémentarité de forme peut être redémontée en retirant l'élément (16) de blocage.
